# EUROPÄISCHE PATENTSCHRIFT

(11) **EP 2 152 636 B1**
(45) Veröffentlichungstag und Bekanntmachung des Hinweises auf die Patenterteilung: **15.06.2011**
(21) Anmeldenummer: 08716475.2
(22) Anmeldetag: 12.03.2008
(51) Int. Cl.: C02F 1/44, A47L 15/42

(54) **Geschirrspülmaschine**
Dishwasher
Lave-vaisselle

(30) Priorität: 25.05.2007 DE 102007024424
(43) Veröffentlichungstag der Anmeldung: 17.02.2010
(73) Patentinhaber: MEIKO Maschinenbau GmbH & Co. KG, 77652 Offenburg (DE)
(72) Erfinder: HILDENBRAND, Karl, 77704 Oberkirch (DE); SCHNEIDER, Vera, 77654 Offenburg (DE)
(74) Vertreter: Hörschler, Wolfram Johannes
(86) Internationale Anmeldenummer: PCT/EP2008/001971
(87) Internationale Veröffentlichungsnummer: WO 2008/145211

(56) Entgegenhaltungen:
- EP-A- 0 578 006
- DE-A1- 10 352 120
- US-A- 4 156 621
- US-A- 4 344 826
- US-A- 5 762 782

## Beschreibung

### Gebiet der Erfindung

Die Erfindung betrifft eine Geschirrspülmaschine, die eine Wasseraufbereitungsvorrichtung umfasst.

### Stand der Technik

In vielen Bereichen der Technik müssen einem Prozess oder einem Verbraucher Flüssigkeiten zugeführt werden, welche einen Mindestreinheitsgrad aufweisen sollen. Ein wichtiges Beispiel ist hierfür der Bereich der Wasch- und Spülmaschinen, welche zum Reinigen verschiedener Arten von Spülgut eingesetzt werden. Insbesondere, jedoch nicht ausschließlich, kann es sich bei diesem Spülgut im Folgenden um Geschirr, Gläser, Besteck, Tabletts oder ähnliches handeln.

Insbesondere im Bereich industrieller Geschirrspülmaschinen ist die Wasserqualität des zugeführten Wassers von erheblicher Bedeutung. Eine ungenügende Wasserqualität führt dazu, dass aufwendige zusätzliche Maßnahmen ergriffen werden müssen, um eine ausreichende Reinigungsleistung zu gewährleisten. Beispielsweise kann es sich dabei um den Zusatz chemischer Stoffe handeln, welche beispielsweise ein Klarspülen mit befriedigendem Ergebnis bewirken. Derartige Zusätze sind jedoch aufgrund der hohen, insgesamt anfallenden Flüssigkeitsmengen stark belastend für die Umwelt und erhöhen die Betriebskosten derartiger industrieller beziehungsweise gewerblicher Geschirrspülmaschinen erheblich. Auch im Haushaltsbereich machen sich die genannten Nachteile bemerkbar. Insbesondere die Umweltbelastung spielt hierbei aufgrund der hohen Anzahl von in privaten Haushalten existierenden Geschirrspülmaschinen eine große Rolle.

Eine Möglichkeit des Betriebs derartiger Geschirrspülmaschinen oder auch anderer Verbraucher besteht darin, zugeführtes Wasser vor der Zufuhr aufzubereiten. Mehrere derartiger Systeme und Verfahren zur Wasseraufbereitung sind aus dem Stand der Technik bekannt. Neben Filtern und Ionentauschern ist beispielsweise bekannt, zur Wasseraufbereitung die sogenannte Umkehrosmose zu verwenden.

Bei der Umkehrosmose handelt es sich um ein physikalisch/chemisches Verfahren zur Reinigung von Flüssigkeiten beziehungsweise zur Aufkonzentrierung von in Flüssigkeiten gelösten Stoffen. Die Umkehrosmose wird zur Aufbereitung von Trink- und Prozesswasser eingesetzt, sowie in verschiedenen anderen Bereichen der Technik.

Bei der Umkehrosmose, oft auch abgekürzt mit UO bzw. nach dem englischen Begriff reverse osmosis mit RO, wird einer Osmosevorrichtung unter Druck stehendes Rohwasser zugeführt. Der Druck wird dabei ausgenutzt, um den natürlichen Osmoseprozess durch eine semipermeable Membran umzukehren. Das Medium, in dem die Konzentration eines bestimmten Stoffes, insbesondere einer bestimmten Verunreinigung verringert werden soll, ist durch die semipermeable Membran von dem Medium getrennt, in dem die Konzentration des Stoffes erhöht werden soll. Dieses wird einem Druck ausgesetzt, welcher höher sein muss als der osmotische Druck.

Die osmotische Membran ist eingerichtet, um nur die Trägerflüssigkeit (solvent), beispielsweise Wasser, durchzulassen und die gelösten Stoffe (solute) zurückzuhalten. Im Gegensatz zu klassischen Filtern verfügen Osmosemembranen in der Regel nicht über durchgehende Poren, sondern die Ionen und Moleküle wandern aufgrund von Diffusionsprozessen durch das Membranmaterial hindurch.

Der osmotische Druck steigt mit zunehmendem Konzentrationsunterschied. Wird der osmotische Druck gleich dem angelegten Druck, so tritt ein Gleichgewicht ein, und es findet kein Reinigungsprozess mehr statt. Dementsprechend wird das Konzentrat in der Regel stetig abgeführt.

Eine Umkehrosmosevorrichtung weist in der Regel eine oder mehrere Membranen auf sowie eine oder mehrere Drucksteigerungspumpen und diverse Steuer- und Regelorgane. Die semipermeable Membran ist dabei in vielen Fällen als Wickelmodul oder Hohlfasermodul ausgeführt, wobei auch andere Ausführungsformen bekannt und für die vorliegende Erfindung einsetzbar sind. Das durch die semipermeable Membran gedrückte Reinwasser (Permeat) wird einem Verbraucher zugeführt, wobei Reinheitsgrade bis ca. 98 % möglich sind. Das mit Verunreinigungen wie beispielsweise Salzen, Mineralien, Schwebestoffen usw. aufkonzentrierte Wasser (Konzentrat) wird in der Regel einem Ablauf zugeführt.

In der Geschirrspülmaschinen-Technik wird das Reinwasser genutzt, damit zum Beispiel das mit Reinigerlösung gespülte Geschirr beziehungsweise andere Arten von Spülgut nach der abschließenden Frischwasserklarspülung ohne sichtbare Rückstände (Wasserflecken) abtrocknen kann. In vielen Fällen ist eine Umkehrosmosevorrichtung als eigenständige Einheit der Spülmaschine vorgeschaltet, oder die Umkehrosmosevorrichtung kann als in die Spülmaschine integrierte Einheit verbaut sein.

US 4,156,621 bezieht sich auf ein Geschirrspülsystem, bei welchem verbrauchtes Wasser aus einer Spülvorrichtung in Tanks gespeichert wird und mit Frischwasser gemischt wird, was bei einer Frischwasserzuführung erfolgt. Anschließend wird das gemischte Wasser einer Umkehrosmoseeinrichtung zugeführt. Das derartig aufbereitete Wasser wird schließlich durch Wärmetauscher den vorgeschalteten Tanks zugeführt, dort aufgeheizt und schließlich wieder zur Spülvorrichtung zurückgeführt.

Bei der Verwendung einer Umkehrosmosevorrichtung ist ein wesentliches Ziel, das Verhältnis von Reinwasser zu Konzentrat optimal zu gestalten, damit der Wasserverbrauch und damit die Betriebs- und Wasserkosten minimiert werden. Je nach Gegebenheit kann der Konzentratanteil über 50 % liegen. Das Verhältnis von Reinwasser zu Konzentrat ist von diversen Faktoren abhängig, zum Beispiel der Bauart der Umkehrosmosevorrichtung, den verwendeten Bauteilen, der Rohwasserqualität, der Wasservorbehandlung (zum Beispiel Vorfiltern für Schmutz, Härtebildner, Chlor, Eisen, Mangan, Kaliumpermanganat, Kieselsäure usw.), der erwarteten Lebensdauer der Membran und vom gewünschten Reinheitsgrad des Reinwassers (zum Beispiel dem Restleitwert).

In vielen Fällen sind bei bekannten Systemen, welche eine Umkehrosmosevorrichtung verwenden, die Betriebskosten und der Wasserverbrauch außerhalb der tolerablen Grenzen, welche für Haushaltsgeräte und/oder gewerbliche Geschirrspülmaschinen gesetzt werden. Ein weiterer Nachteil bekannter Systeme besteht darin, dass das Verhältnis von Reinwasser zu Konzentrat unter Umständen starken Schwankungen unterworfen sein kann, so dass auch die Betriebskosten nicht immer konstant und damit vorhersehbar sind. Auch die Wasserqualität des Reinwassers ist mitunter starken Schwankungen unterworfen.

### Aufgabe der Erfindung

Es ist daher eine Aufgabe der vorliegenden Erfindung, eine Wasseraufbereitungsvorrichtung für den Einsatz in einer Geschirrspülmaschine vorzusehen, welche die Betriebs- und Wasserkosten senkt und die Wasserqualität und die Ausbeute der Aufbereitung verbessert.

### Beschreibung der Erfindung

Die Erfindung geht aus von der Erkenntnis, dass die Temperatur des zulaufenden Wassers (Rohwasser) einen erheblichen Einfluss auf die Reinwasserausbeute hat. Die Temperatur des zulaufenden Wassers kann jedoch regional unterschiedlich sein oder kann beispielsweise den Jahreszeiten und Witterungsverhältnissen entsprechend schwanken. Dabei steigt die Reinwassermenge in der Regel bei steigender Temperatur und gleichbleibender Konzentratwassermenge.

Selbst wenn die Temperatur des zugeführten Rohwassers innerhalb der von den Modulherstellern der Umkehrosmosevorrichtungen vorgegebenen Werte (typischerweise 1 bis 30 °C oder 1 bis 45 °C, höhere Werte sind möglich) liegt, ist die Reinwassermenge starken Schwankungen unterworfen. So steigt die Reinwassermenge bei steigender Temperatur und zumindest näherungsweise gleichbleibender Konzentratwassermenge. Der Unterschied zwischen den niedrigsten und höchstmöglichen der genannten Zulauftemperaturen kann ein Vielfaches der Reinwassermenge betragen.

Ausgehend von dieser Erkenntnis besteht der erfindungsgemäße Gedanke im Wesentlichen darin, die Umkehrosmosevorrichtung mit Rohwasser einer vorgegebenen und vorzugsweise genau geregelten oder eingestellten Temperatur zu speisen. Diese vorgegebene Temperatur kann den Bedingungen der Umkehrosmosevorrichtung, eines angeschlossenen Verbrauchers und den Wasserzulauftemperaturen angepasst werden.

Es wird dementsprechend eine Geschirrspülmaschine mit einer Wasseraufbereitungsvorrichtung vorgeschlagen, welche eine Umkehrosmosevorrichtung mit einer Rohwasserzuleitung, einer Reinwasserableitung und einem Konzentratwasserablauf aufweist. Die Rohwasserzuleitung ist dabei mit einer Mischvorrichtung verbunden, welche einen Warmwasserzulauf und einen Kaltwasserzulauf aufweist sowie vorzugsweise einen Temperaturfühler zur Messung einer Mischungstemperatur des der Umkehrosmosevorrichtung zugeführten Mischwassers. Mittels dieser Vorrichtung kann die vorgegebene Temperatur des der Umkehrosmosevorrichtung zugeführten Rohwassers durch Mischung von Kaltwasser mit Warmwasser eingestellt werden.

Als Umkehrosmosevorrichtungen können dabei handelsübliche Umkehrosmosevorrichtungen eingesetzt werden, welche kommerziell erhältlich sind. Dabei lassen sich im Wesentlichen alle gängigen Arten und Formen von semipermeablen Membranen, beispielsweise die oben beschriebenen Arten und Formen, einsetzen.

Insbesondere kann die Mischvorrichtung zur Einstellung der Wassertemperatur des Rohwassers ein Mischventil zur Mischung von Warmwasser und Kaltwasser aufweisen. Alternativ oder zusätzlich können auch der Warmwasserzulauf und/oder der Kaltwasserzulauf jeweils mindestens eines der folgenden Elemente aufweisen: ein Ventil, insbesondere ein Magnetventil; einen Temperaturfühler, einen Temperaturregler, eine Drossel, insbesondere eine Drossel mit fest eingestelltem oder einstellbarem Drosselquerschnitt. Auf diese Weise lassen sich ebenfalls Mischtemperaturen für das der Umkehrosmosevorrichtung zugeführte Rohwasser einstellen.

Weiterhin kann die Geschirrspülmaschine mit der Wasseraufbereitungsvorrichtung, alternativ oder zusätzlich, derart ausgestaltet sein, dass die Mischvorrichtung einen Mischbehälter aufweist, in welchen vorzugsweise der Warmwasserzulauf und der Kaltwasserzulauf münden. Dieser Mischbehälter ist dann mit der Umkehrosmosevorrichtung verbunden. Auf diese Weise kann beispielsweise zunächst im Mischbehälter die gewünschte Temperatur eingestellt werden, beispielsweise wiederum mit Hilfe von Temperaturfühlern und/oder Temperaturreglern. Zur Erzeugung des für die Umkehrosmose erforderlichen Drucks kann der Mischbehälter mit der Umkehrosmosevorrichtung über eine Drucksteigerungspumpe verbunden sein.

Weiterhin kann die Geschirrspülmaschine mit der Wasseraufbereitungsvorrichtung zusätzlich eine Regelvorrichtung umfassen. Neben der bereits erwähnten Temperaturregelvorrichtung kann diese Regelvorrichtung auch weitere Funktionen umfassen, wie beispielsweise eine "intelligente" Regelung, bei welcher weitere Regelparameter (zum Beispiel Wasserqualität des Rohwassers/des Reinwassers, gewünschte Wasserqualität, Kaltwassertemperatur etc.) berücksichtigt werden. Die Regelvorrichtung kann beispielsweise einen Mikroprozessor oder einen anderen Computer umfassen, in welchem bestimmte Regelalgorithmen abgespeichert sind, sowie Ein- und Ausgabevorrichtungen. Alternativ oder zusätzlich kann die Regelvorrichtung auch eine einfache elektronische Regelung umfassen, welche auf diskreten elektronischen Bausteinen basiert.

Die Reinwasserausbeute und/oder die Wasserqualität können weiter dadurch verbessert werden, dass ein Teil des Konzentrats zurückgeführt wird. Dementsprechend kann der Konzentratablauf über eine Konzentratrückführung mit dem Rohwasserzulauf verbunden sein. Das Rückführungsverhältnis kann beispielsweise über fest eingestellte oder einstellbare (zum Beispiel auch elektronisch einstellbare beziehungsweise regelbare) Blenden in der Konzentratrückführung und/oder im Konzentratablauf eingestellt werden.

Die vorgeschlagene Wasseraufbereitungsvorrichtung in einer der oben beschriebenen Ausführungen weist gegenüber herkömmlichen Wasseraufbereitungsvorrichtungen zahlreiche Vorteile auf, welche sich insbesondere im gewerblichen Einsatz bemerkbar machen. So ist der Wirkungsgrad und die Leistung der Wasseraufbereitungsvorrichtung mit temperaturgeregelter Rohwasserzufuhr höher, da die Konzentratwassermenge im Verhältnis zum Reinwasseranteil gesenkt werden kann. Insbesondere werden dadurch der Wasserverbrauch und die Betriebskosten erheblich gesenkt. Weiterhin kann die Betriebsbereitschaft eines Systems, beispielsweise einer Wasseraufbereitungsvorrichtung mit einem daran angeschlossenen Verbraucher, stark beschleunigt werden bzw. die Zeitdauer bis zum Eintreten der Betriebsbereitschaft kann gesenkt bzw. im Vergleich zu herkömmlichen Systemen vorhersehbarer ausgestaltet werden. Insbesondere lassen sich beispielsweise Spülmaschinen oder andere Verbraucher, welche Reinwasser benötigen, schneller befüllen bzw. in Betriebsbereitschaft versetzen.

Weiterhin lassen sich durch die verringerten Zeitdauern auch Zykluszeiten und/oder Arbeitszeiten der Wasseraufbereitungsvorrichtung bzw. fertiger Systeme senken. Weiterhin lassen sich die Betriebs- und Arbeitskosten reduzieren, und das gesamte Verfahren der Wasseraufbereitung lässt sich umweltschonender gestalten. Auch können durch die Erhöhung des Wirkungsgrades der Wasseraufbereitung kleinere Umkehrosmosevorrichtungen eingesetzt werden, was die Anschaffungskosten senkt und den Platzbedarf am Arbeitsplatz und die Baugröße der Systeme verringert.

Ein weiterer Vorteil der temperaturgeregelten Rohwasserzufuhr zur Umkehrosmosevorrichtung besteht darin, dass der Druck im Umkehrosmosesystem stark abhängig ist von der Temperatur des zugeführten Rohwassers. Bei tieferen Temperaturen kann der Systemdruck um ein Vielfaches höher sein als bei erhöhten Temperaturen. Somit hat auch hier die gleichbleibend höhere Temperatur erhebliche Vorteile. Insbesondere wird die Sicherheit der verwendeten Bauteile für die Wasseraufbereitungsvorrichtung erhöht beziehungsweise gewährleistet (d.h. zum Beispiel die Sicherheit des Gesamtmoduls, einer Pumpe, einer Steuer- und Regeleinheit, von Verbindungsleitungen etc.). Dadurch steigt nicht nur die Benutzerfreundlichkeit, sondern auch die Lebensdauer der Bauteile wird erhöht. Weiterhin wird durch die Drucksenkung das Risiko von Undichtigkeiten (zum Beispiel Wasserschäden) und einer Gefährdung von Personen stark vermindert.

Die Temperatur der Rohwasserzufuhr liegt dabei vorzugsweise dicht an der Maximaltemperatur der Umkehrosmosevorrichtung, also beispielsweise 10% oder 5% (in °C) unterhalb dieser Maximaltemperatur. Dabei ist ggf. eine Toleranz der vorgeschalteten Temperaturregelung zu beachten, so dass die maximale Temperaturtoleranz zusammen mit der Solltemperatur die maximale Temperatur der Umkehrosmosevorrichtung bzw. des Osmosemoduls nicht überschreitet.

Weiterhin sind auch Umkehrosmosemodule bekannt, die bei 60°C (bis 90°C) betrieben werden können. Bei derartigen Modulen kann die Grenze der Zulaufwassertemperatur von den bauseitigen Gegenebenheiten abhängig sein.

Eine natürliche Grenze der Temperatur der Rohwasserzufuhr kann insbesondere beispielsweise im Bereich von ca. 60 °C liegen. Bei höheren Temperaturen kann es bei kalkhaltigem Wasser zu Kalkausfällungen kommen, welche zu Funktionsstörungen der Umkehrosmoseeinrichtung und/oder vorgeschalteten Bauteilen, oder sogar der gesamten Wasseraufbereitungsvorrichtung, führen können.

Der Begriff der Geschirrspülmaschine ist wie oben beschrieben, weit zu fassen und umfasst eine Vielzahl möglicher Arten von Spülgut. Es kann sich dabei um Einkammer- oder um Mehrkammer-Geschirrspülmaschinen handeln, wobei auch Durchlauf-Geschirrspülmaschinen von dem erfindungsgemäßen Gedanken stark profitieren. Insbesondere im gewerblichen Bereich machen sich dabei die oben beschriebenen Vorteile stark bemerkbar.

Die Geschirrspülmaschine umfasst eine Spülkammer mit einem Sprühsystem zur Beaufschlagung von Spülgut mit Spülflüssigkeit. Dieses Sprühsystem kann beispielsweise ein Sprühsystem für einen Spülvorgang mit einer ersten Spülflüssigkeit beinhalten, welches beispielsweise im Umwälzbetrieb eingesetzt wird. Weiterhin kann dieses Sprühsystem ein Nachspül-Sprühsystem umfassen, welches besonders bevorzugt mit Reinwasser betrieben wird. Die vorgeschlagene Geschirrspülmaschine ist mit einem Spülflüssigkeitszulauf ausgestattet, welcher mit einer Wasseraufbereitungsvorrichtung gemäß einer der oben beschriebenen Ausführungsformen verbunden ist. Auf diese Weise kann von der Reinwasserableitung der Umkehrosmosevorrichtung dem Spülflüssigkeitszulauf Reinwasser zugeführt werden, was insbesondere für einen Nachspülvorgang genutzt werden kann. Auch für andere Spülvorgänge kann das Reinwasser jedoch genutzt werden, beispielsweise zum Auffüllen eines Umwälztanks zu Beginn eines Spülzyklus.

Ein besonders bevorzugtes Verfahren zum Betrieb der Vorrichtung beziehungsweise der Geschirrspülmaschine besteht darin, sich für die Temperaturregelung des der Umkehrosmose zugeführten Rohwassers eine Abwärme der Geschirrspülmaschine zu Nutze zu machen. Dieser Grundgedanke kann, abgesehen von der beschriebenen Geschirrspülmaschine, auf jegliche andere Art von Verbraucher übertragen werden, welcher irgendeine (gewollte oder ungewollte) Wärmequelle aufweist und mit Reinwasser gespeist wird. Dabei kann das für die Mischung verwendete Warmwasser für die Mischvorrichtung dadurch generiert beziehungsweise aufgewärmt werden, dass hierzu über einen Wärmetauscher die Abwärme des Verbrauchers genutzt wird. Dieser Wärmetauscher (wobei es sich sinngemäß auch um mehrere Wärmetauscher handeln kann) kann an die Gegebenheiten des Verbrauchers angepasst werden.

Die Geschirrspülmaschine kann beispielsweise eine Heizvorrichtung zur Erwärmung der zugeführten Spülflüssigkeit aufweisen. Beispielsweise kann diese Heizvorrichtung einen Boiler umfassen, welcher insbesondere genutzt werden kann, um Nachspülflüssigkeit aufzuwärmen. Besonders bevorzugte Temperaturen im Bereich dieses Boilers beziehungsweise der Spülflüssigkeit im Boiler liegen zwischen 60 °C und 85 °C. Die Beheizung des Boilers kann beispielsweise elektrisch, über Dampf, über Heißwasser, über Gas oder über andere bekannte Heizvorrichtungen erfolgen. Der Begriff "Boiler" ist dabei weit zu fassen und kann beispielsweise auch einen Durchlauferhitzer umfassen. Der Boiler kann mit dem Sprühsystem beispielsweise direkt verbunden sein, in dem beispielsweise ein Druck des dem Boiler zugeführten Reinwassers ausgenutzt wird. Alternativ oder zusätzlich kann der Boiler mit dem Sprühsystem auch über eine Drucksteigerungspumpe verbunden sein.

Zur Umsetzung des oben beschriebenen Gedankens der Erwärmung des Warmwassers für die Mischvorrichtung durch Abwärme der Geschirrspülmaschine kann der Boiler beispielsweise zusätzlich einen Boilerwärmetauscher aufweisen. In diesem Fall kann beispielsweise Kaltwasser dem Wärmetauscher zugeführt, dann im Wärmetauscher aufgewärmt werden, um dann der Mischvorrichtung zur Erzeugung des temperierten Rohwassers für die Umkehrosmosevorrichtung zugeführt zu werden.

Alternativ oder zusätzlich zu der beschriebenen Möglichkeit der Nutzung der Abwärme zur Erzeugung von Warmwasser mittels eines Boilerwärmetauschers kann die Geschirrspülmaschine auch einen Tank umfassen, in welchem die Spülflüssigkeit zumindest teilweise gesammelt wird. Beispielsweise kann es sich bei diesem Tank um einen Umwälztank handeln. Der Tank kann auch (z.B. durch eine entsprechende Heiz- und oder Regelvorrichtung) erwärmbar oder temperierbar ausgestaltet sein, beispielsweise, um die Flüssigkeit im Tank auf einer bevorzugten Temperatur von 60 °C bis 75 °C zu halten.

Auch dieser Tank kann einen Tankwärmetauscher aufweisen, welcher mit dem Warmwasserzulauf der Umkehrosmosevorrichtung verbunden ist, so dass der Tankwärmetauscher das dem Warmwasserzulauf zugeführte Wasser aufheizen kann.

Auch andere Arten der Nutzung von Abwärme zur Aufwärmung des Warmwassers für die Umkehrosmosevorrichtung sind denkbar. So kann die Geschirrspülmaschine, alternativ oder zusätzlich zu den oben beschriebenen Möglichkeiten, weiterhin einen Wärmerückführungs-Wärmetauscher aufweisen, welcher mit dem Warmwasserzulauf der Umkehrosmosevorrichtung verbunden ist und welcher das dem Warmwasserzulauf zugeführte Wasser aufheizen kann.

Insbesondere kann dieser Wärmerückführungs-Wärmetauscher derart ausgestaltet sein, dass dieser warme Luft und/oder Dampf in der Spülkammer beziehungsweise die darin enthaltene Wärme ausnutzt. Insbesondere kann der Wärmerückführungs-Wärmetauscher zu diesem Zweck eine Kondensatniederschlagseinrichtung aufweisen, an welcher in der Spülkammer enthaltener Dampf kondensiert und dabei Wärme an Wasser im Wärmerückführungs-Wärmetauscher abgibt. Beispielsweise kann es sich bei dieser Kondensatniederschlagseinrichtung um ein oder mehrere Kühlplatten, Kühlschlangen etc. handeln. Diese können von der zu erwärmenden Flüssigkeit durchflossen werden. Alternativ oder zusätzlich kann auch das Kondensat, welches an diesen Kühlelementen kondensiert und immer noch eine erhöhte Temperatur aufweist, genutzt werden. Die Kühlschlangen oder Kühlplatten können beispielsweise auch in einem Gehäuse angeordnet sein, durch welches der Dampf oder die heiße Luft strömt, beispielsweise getrieben durch ein Gebläse. Wiederum kann auch der Wärmerückführungs-Wärmetauscher mit einem Kaltwasserzulauf verbunden sein, und ablaufseitig mit dem Warmwasserzulauf der Umkehrosmosevorrichtung.

Die Wasseraufbereitungsvorrichtung kann dabei in ein Gehäuse der Geschirrspülmaschine integriert sein oder kann, ganz oder teilweise, auch als separate, von der restlichen Geschirrspülmaschine getrennte Einheit ausgebildet sein. Besonders bevorzugt ist es dabei, wenn die Geschirrspülmaschine eine Maschinensteuerung aufweist, welche eingerichtet ist, um die Mischvorrichtung der Wasseraufbereitungsvorrichtung zu steuern. Beispielsweise kann diese Maschinensteuerung eine Programmsteuerung zur Steuerung von Programmabläufen der Geschirrspülmaschine umfassen, wobei gleichzeitig oder zusätzlich der Betrieb der Wasseraufbereitungsvorrichtung gesteuert wird. Beispielsweise kann diese Wasseraufbereitungsvorrichtung derart gesteuert werden, dass diese zeitlich synchronisiert wird mit dem Reinwasserbedarf in der Geschirrspülmaschine, so dass beispielsweise rechtzeitig Reinwasser in einem Boiler bereitgestellt wird, ohne dass dieses dort allzu lange verbleibt. Auf diese Weise lassen sich die Programmabläufe optimieren. Beispielsweise kann diese Maschinensteuerung wiederum einen oder mehrere Computer umfassen, beispielsweise einen Mikrocomputer, welcher entsprechend programmtechnisch für die Steuerung eingerichtet ist. Weiterhin können entsprechend Ein- und Ausgabevorrichtungen enthalten sein, beispielsweise eine oder mehrere Displays, eine Tastatur oder ähnliches. Alternativ oder zusätzlich kann die Maschinensteuerung auch entsprechende elektrische Steuerungsbausteine umfassen.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination verwirklicht sein. Die Erfindung ist nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigt:
- Figur 1: ein Vergleichsbeispiel einer Wasserautbereitungsvorrichtung, welche an einen Verbraucher angeschlossen ist;
- Fig. 2 u. 3: Permeatdurchfluss durch eine Umkehrosmosevorrichtung und Druck an einer Rohwasserzuleitung einer Umkehrosmosevorrichtung als Funktion der Wassertemperatur; und
- Figur 4: ein Ausführungsbeispiel einer erfindungsgemäßen Geschirrspülmaschine mit einer Wasseraufbereitungsvorrichtung.

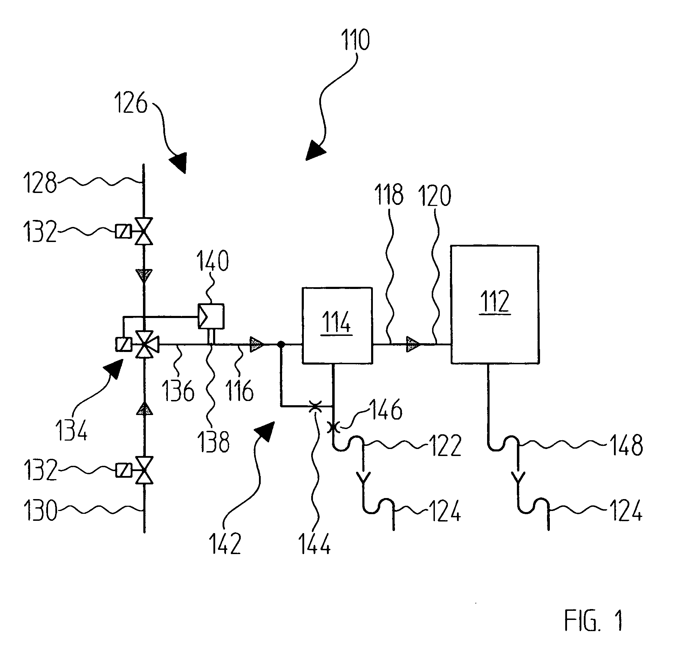

In Figur 1 ist ein Ausführungsbeispiel einer Wasseraufbereitungsvorrichtung 110 dargestellt, welche an einen Verbraucher 112 angeschlossen ist. Zentrales Element dieser Wasseraufbereitungsvorrichtung 110 ist eine Umkehrosmosevorrichtung 114, bei welcher es sich beispielsweise um eine kommerziell erhältlich Umkehrosmosevorrichtung mit einer Membran, beispielsweise einer Polyamid-Membran, handeln kann. Wie oben beschrieben, sind dabei verschiedene, dem Fachmann bekannte Ausführungsformen möglich.

Die Umkehrosmosevorrichtung 114 weist eine Rohwasserzuleitung 116 und eine Reinwasserableitung 118 auf. Die Reinwasserableitung ist mit einem Reinwasserzulauf 120 des Verbrauchers 112 verbunden. Weiterhin weist die Umkehrosmosevorrichtung 114 einen Konzentratablauf 122 auf, welcher beispielsweise mit einem Abfluss 124 verbunden sein kann.

Die Wasseraufbereitungsvorrichtung 110 umfasst weiterhin eine Mischvorrichtung 126. Die Mischvorrichtung 126 weist einen Warmwasserzulauf 128 und einen Kaltwasserzulauf 130 auf. Vorzugsweise wird der Kaltwasserzulauf 130 mit Kaltwasser einer Temperatur zwischen 10°C und 30°C beaufschlagt, wohingegen der Warmwasserzulauf 128 vorzugsweise mit Warmwasser einer Temperatur von 40°C bis 60°C beaufschlagt wird. Die Zuläufe 128, 130 können beispielsweise mit entsprechenden Warm- bzw. Kaltwasserversorgungen verbunden sein, welche beispielsweise durch Hausleitungen oder durch zusätzliche Versorgungseinrichtungen bereitgestellt werden. Kalt- und Warmwasserzulauf 130 bzw. 128 weisen dabei jeweils Zulaufventile 132 auf, wobei es sich beispielsweise um Magnetventile handeln kann.

Der Kalt- und Warmwasserzulauf 130 bzw. 128 münden in dem in Figur 1 dargestellten Ausführungsbeispiel in einem Mischventil 134. Dieses Mischventil ist an seinem Mischausgang 136 mit der Rohwasserzuleitung 116 verbunden.

Die Temperatur des vom Mischausgang 136 an die Rohwasserzuleitung 116 bereitgestellten Mischwassers wird von einem Temperaturfühler 138 überwacht. Dieser Temperaturfühler ist verbunden mit einer Regelvorrichtung 140, welche wiederum auf das Mischventil 134 einwirkt, um die Temperatur des Rohwassers fest einzustellen beziehungsweise zu regeln. Zu diesem Zweck kann die Regelvorrichtung 140 insbesondere das Verhältnis von aus dem Warmwasserzulauf 128 bereitgestellten Warmwasser zum aus dem Kaltwasserzulauf 130 bereitgestellten Kaltwasser einstellen beziehungsweise regeln. Auf diese Weise lässt sich die Temperatur des Rohwassers und damit, wie oben beschrieben, die Leistung der Umkehrosmosevorrichtung 114 genau einstellen.

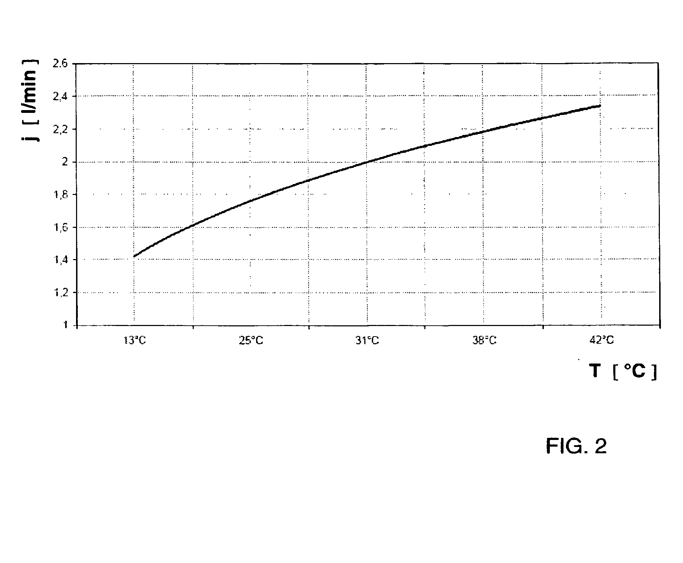

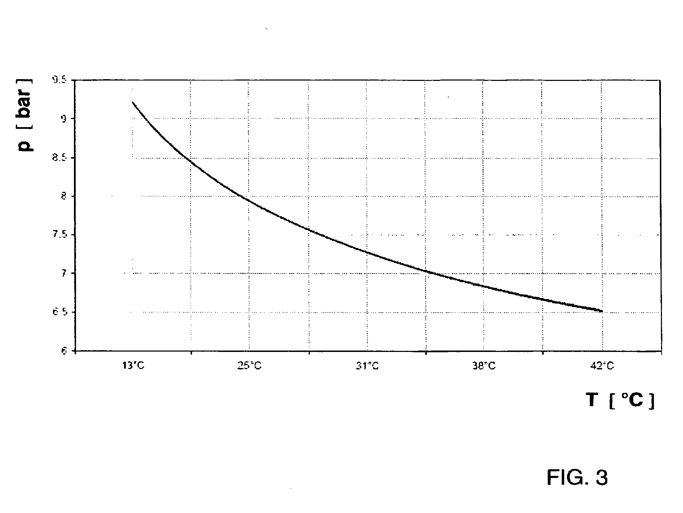

Der Effekt dieser Temperaturregelung beziehungsweise Temperatureinstellung des Rohwassers, welches der Umkehrosmosevorrichtung 114 zugeführt wird, ist in Figur 2 und in Figur 3 veranschaulicht. Dort sind der Permeatdurchfluss j in l/min (Figur 2) beziehungsweise der Druck p in bar (Figur 3) an der Rohwasserzuleitung 116 beziehungsweise dem Gehäuseeingang der Umkehrosmosevorrichtung 114 jeweils als Funktion der Temperatur in °C über einen Bereich zwischen 13 °C und 42 °C dargestellt. Diese beispielhafte Darstellung stellt lediglich einen Auszug aus einem vollständigen Diagramm dar. Für die Messung wurde eine kommerziell erhältliche Umkehrosmoseanlage mit einer vorgeschalteten Drucksteigerungspumpe (in Figur 1 nicht dargestellt) verwendet. Weiterhin wurde für diese Messung eine Konzentratrückführung eingesetzt. Dabei wurde ein Teil des Konzentrats vom Konzentratablauf 122 über eine Konzentratrückführung 142 zur Rohwasserzuleitung 116 zurückgeführt. Das Verhältnis der Konzentratrückführung wurde durch zwei Blenden 144 beziehungsweise 146 eingestellt.

Wie aus den Figuren 2 und 3 hervorgeht, sind der Permeatdurchfluss und der Druck am Gehäuseeingang stark von der Rohwassertemperatur abhängig. So zeigt es sich, dass über den beobachteten Temperaturbereich der Permeatdurchfluss um 64 % ansteigt. Gleichzeitig sinkt der Druck am Gehäuseeingang (und somit beispielsweise auch die Gefahr, welche von einer derartigen Wasseraufbereitungsvorrichtung 110 ausgeht und das Risiko einer Undichtigkeit). Die Messungen zeigen deutlich, dass die Effizienz der Wasseraufbereitungsvorrichtung 110 und die Betriebssicherheit durch die Regelung der Temperatur der Rohwasserzufuhr gemäß der in Figur 1 dargestellten Vorrichtung deutlich verbessert werden können. Wird anstelle einer einfachen Einstellung der Rohwassertemperatur eine Regelung derselben vorgenommen, wie dies ebenfalls mit der Vorrichtung gemäß Figur 1 möglich ist, so lässt sich zudem die Zuverlässigkeit und die Reproduzierbarkeit der Wasseraufbereitung erheblich verbessern.

Wie oben bereits teilweise beschrieben, sind zahlreiche alternative Ausgestaltungen der Wasseraufbereitungsvorrichtung 110 denkbar. So kann, alternativ zu der hier dargestellten Rohwasserzuleitung über das Mischventil 134 auch eine Zuleitung zur Osmoseeinheit über zwei Einzelventile erfolgen. Die Mischtemperatur kann eingestellt beziehungsweise geregelt werden über eine Regelung dieser zwei Einzelventile. Anstelle von Ventilen lassen sich auch fest eingestellte oder regelbare Drosseln einsetzen. Wiederum lassen sich auch Temperaturregler oder Temperaturfühler einsetzen.

Eine weitere Alternative zum in Figur 1 dargestellten Mischventil 134 besteht in der Verwendung eines Mischbehälters. Die Zuläufe 128, 130 können in diesen Mischbehälter münden, und die Temperatur im Mischbehälter kann beispielsweise wiederum über Ventile in den Zuläufen 128, 130, beispielsweise wiederum über die Zulaufventile 132, eingestellt werden. Die Regelung kann wiederum über Temperaturregler oder Temperaturfühler erfolgen, welche mit dem Mischbehälter gekoppelt sind. Wiederum kann dieser Mischbehälter über den Zuleitungsdruck und/oder über Zwischenschaltung einer oder mehrerer Drucksteigerungspumpen dann mit der Rohwasserzuleitung 116 der Umkehrosmosevorrichtung 114 verbunden sein.

In Figur 1 ist ein Verbraucher 112 dargestellt, welcher von der Umkehrosmosevorrichtung 114 über den Reinwasserzulauf 120 mit Reinwasser versorgt wird. Dabei kann es sich bei dem Verbraucher 112 um einen beliebigen Verbraucher handeln, welcher Wasser mit einer bevorzugten Mindestqualität benötigt. Der Verbraucher 112 weist einen Verbraucherablauf 148 auf, welcher beispielsweise wiederum in einem Abfluss 124 mündet.

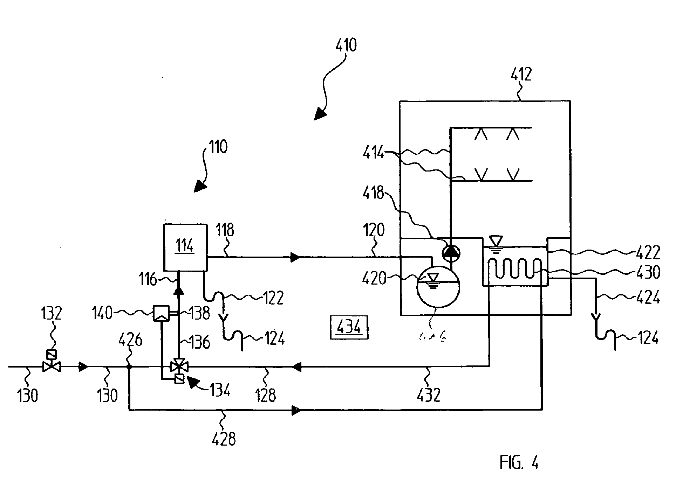

Wie oben beschrieben, lässt sich die in Figur 1 dargestellte Wasseraufbereitungsvorrichtung 110 in einer der beschriebenen Alternativen besonders vorteilhaft einsetzen zum Betrieb einer Geschirrspülmaschine. Eine derartige Geschirrspülmaschine 410 ist in Figur 4 in einem Ausführungsbeispiel dargestellt.

Die Geschirrspülmaschine 410 umfasst eine Spülkammer 412 zur Aufnahme von (nicht dargestelltem) Spülgut. In der Spülkammer 412 sind ein oder mehrere Sprühsysteme 414 vorgesehen, über welches beziehungsweise welche das Spülgut mit Spülflüssigkeit beziehungsweise Nachspülflüssigkeit beaufschlagt werden kann. Im in Figur 4 dargestellten Ausführungsbeispiel ist das Sprühsystem 414 lediglich als Nachspül-Sprühsystem ausgestaltet, gegebenenfalls weiter vorhandene Sprühsysteme sind nicht dargestellt.

Die Geschirrspülmaschine 410 weist weiterhin, in diesem Ausführungsbeispiel innerhalb der Spülkammer 412, einen Boiler 416 auf, welcher über einen (in Figur 4 als druckloser Zulauf ausgestalteten) Reinwasserzulauf 120 befüllt werden kann. Der Boiler 416 ist mit einer (in Figur 4 nicht dargestellten) Heizvorrichtung ausgestaltet, um Spülflüssigkeit im Boiler 416 auf eine gewünschte Boilertemperatur (zum Beispiel zwischen 60 °C und 85 °C) aufzuheizen. Die Spülflüssigkeit im Boiler 416 wird dann über eine Drucksteigerungspumpe 418 dem Sprühsystem 414 zugeführt. Im Boiler 416 ist weiterhin eine Niveauregelung 420 vorgesehen. Weiterhin können Temperaturfühler (nicht dargestellt) im Boiler 416 angeordnet sein.

Alternativ zur Verwendung einer Drucksteigerungspumpe 418 kann auch ein Zuleitungsdruck der Reinwasserzuleitung 120 genutzt werden, um die Spülflüssigkeit (zum Beispiel Nachspülflüssigkeit) dem Sprühsystem 414 zuzuführen. In diesem Fall kann auf die Drucksteigerungspumpe 418 verzichtet werden.

Weiterhin weist die Geschirrspülmaschine 410 in der Spülkammer 412 einen Tank 422 auf. In diesem Tank 422, welcher beispielsweise auch gleichzeitig ein Umwälztank für einen (dem Nachspülschritt in der Regel vorangehenden) Spülvorgang sein kann, wird Spülflüssigkeit aus der Spülkammer 412 gesammelt. Der Tank 422 ist über einen Tankablauf 424 mit einem Abfluss 124 verbunden. Der Tank 422 kann zusätzlich eine Tankheizung (nicht dargestellt) aufweisen. Bevorzugt liegt die Tanktemperatur zwischen 60 °C und 75 °C.

Die Wasseraufbereitungsvorrichtung 110 ist im Ausführungsbeispiel gemäß Figur 4 grundsätzlich ähnlich aufgebaut wie im Beispiel gemäß Figur 1. Auch die oben beschriebenen Alternativen können sinngemäß wieder umgesetzt werden.

Wiederum wird für eine temperaturgeregelte Zufuhr von Rohwasser zur Umkehrosmosevorrichtung 114 ein Mischventil 134 verwendet. Eine Besonderheit der in Figur 4 dargestellten Geschirrspülmaschine 410 liegt jedoch darin, dass der Warmwasserzulauf 128, welcher zum Mischventil 134 führt, nicht mit einer (zum Beispiel gebäudeseitig bereitzustellenden) Warmwasserversorgung verbunden ist. Stattdessen zweigt vom Kaltwasserzulauf 130 an einer Abzweigung 426 eine Leitung 428 ab, welche zu einem Tankwärmetauscher 430 führt.

Dieser Tankwärmetauscher 430 stellt lediglich eines von mehreren möglichen, oben beschriebenen Ausführungsbeispielen dar, wie Abwärme der Geschirrspülmaschine 410 genutzt werden kann, um der Umkehrosmosevorrichtung 114 temperaturgeregeltes Rohwasser zuzuführen. Der Tankwärmetauscher 430 kann beispielsweise im Tank 422, wie in Figur 4 dargestellt, ausgestaltet sein. Alternativ oder zusätzlich kann dieser auch am Tank 422 angeordnet sein, kann im oder am Boiler 416 angeordnet sein oder kann an einer anderen Stelle in der Spülkammer 412 angeordnet sein. Beispielsweise kann in der Spülkammer 412, beispielsweise im Deckenbereich, eine Anordnung aus einer oder mehreren Wärmetauscherplatten vorgesehen sein, über welche Wärme aus dem in der Spülkammer 412 nach oder während des Spülvorgangs vorhandenen Dampf oder der heißen Luft Wärme aufgenommen werden kann. Insbesondere kann dabei auch zumindest ein Teil des in der Spülkammer 412 vorhandenen Dampfes kondensiert werden, was darüber hinaus den Vorteil bietet, dass eine Belastung der Umgebungsluft der Geschirrspülmaschine 410 mit Dampfphrasen verringert wird.

Vom Tankwärmetauscher 430 führt eine Leitung 432, welche mit dem Warmwasserzulauf 128 gleichzusetzen ist, zum Mischventil 134. Um das Verhältnis zwischen Kaltwasser und Warmwasser im Mischventil 134 weiter einzustellen, können auch zwischen der Abzweigung 426 und dem Mischventil 134 und/oder in den Leitungen 428 und/oder 432 zusätzliche Ventile 132 vorgesehen sein, beispielsweise wiederum Magnetventile.

Auf diese Weise kann wiederum über den Temperaturregler 140 die Temperatur des der Umkehrosmosevorrichtung 114 zugeführten Rohwassers zumindest in bestimmten Betriebsphasen der Geschirrspülmaschine 410 exakt eingestellt werden beziehungsweise diese Temperatur geregelt werden. Beispielsweise kann in einer Umwälzphase (Spülen) die Abwärme des Spülwassers bzw. der Spülflüssigkeit genutzt werden, um der Umkehrosmosevorrichtung 114 genau temperiertes Rohwasser zuzuführen, um damit wiederum Reinwasser für einen anschließenden Nachspülvorgang zu generieren, welches dem Boiler 416 zugeführt wird. Wiederum sind auch die oben diskutierten alternativen Ausgestaltungen und Abwandlungen denkbar, wobei beispielsweise auch eine Teilrückführung von Konzentrat vom Konzentratablauf 122 zur Rohwasserzuleitung 116, welche in Figur 4 nicht dargestellt ist, möglich ist.

Weiterhin weist die Geschirrspülmaschine 410 in dem Ausführungsbeispiel gemäß Figur 4 eine Maschinensteuerung 434 auf. Diese Maschinensteuerung 434 kann beispielsweise mit Sensoren, wie beispielsweise dem Temperaturfühler 138, dem Niveausensor 420 und/oder weiteren Sensoren und/oder Fühlern verbunden sein. Auch kann diese Maschinensteuerung 434 ganz oder teilweise die Regelvorrichtung 140 umfassen. Diese Maschinensteuerung 434 kann insbesondere derart ausgestaltet sein, dass sämtliche Vorgänge und Prozesse der Geschirrspülmaschine 410 durch diese Maschinensteuerung 434 regelbar sind. Insbesondere kann die oben beschriebene Regelung der Rohwassertemperatur durch diese Maschinensteuerung 434 vorgenommen werden.

### Bezugszeichenliste

- 110: Wasseraufbereitungsvorrichtung
- 112: Verbraucher
- 114: Umkehrosmosevorrichtung
- 116: Rohwasserzuleitung
- 118: Reinwasserableitung
- 120: Reinwasserzulauf
- 122: Konzentratablauf
- 124: Abfluss
- 126: Mischvorrichtung
- 128: Warmwasserzulauf
- 130: Kaltwasserzulauf
- 132: Zulaufventile
- 134: Mischventil
- 136: Mischausgang
- 138: Temperaturfühler
- 140: Regelvorrichtung
- 142: Konzentratrückführung
- 144: Blende
- 146: Blende
- 148: Verbraucherablauf

- 410: Geschirrspülmaschine
- 412: Spülkammer
- 414: Sprühsystem
- 416: Boiler
- 418: Drucksteigerungspumpe
- 420: Niveauregelung
- 422: Tank
- 424: Tankablauf
- 426: Abzweigung
- 428: Leitung
- 430: Tankwärmetauscher
- 432: Leitung
- 434: Maschinensteuerung

## Patentansprüche

1. Geschirrspülmaschine (410), umfassend eine Spülkammer (412) mit einem Sprühsystem (414) zur Beaufschlagung von Spülgut mit Spülflüssigkeit, wobei die Geschirrspülmaschine (410) einen Spülflüssigkeitszulauf (120) aufweist, wobei die Geschirrspülmaschine (410) weiterhin eine Wasserautbereitungsvorrichtung (110) umfasst, wobei die Wasseraufbereitungsvorrichtung (110) eine Umkehrosmosevorrichtung (114) mit einer Rohwasserzuleitung (116), einer Reinwasserableitung (118) und einem Konzentratablauf (122) umfasst, wobei die Rohwasserzuleitung (116) mit einer Mischvorrichtung (126) verbunden ist, wobei die Mischvorrichtung (126) zur Einstellung einer Mischungstemperatur des der Umkehrosmosevorrichtung (114) zugeführten Rohwassers eingerichtet ist und einen Warmwasserzulauf (128) und einen Kaltwasserzulauf (130) aufweist, wobei der Spülflüssigkeitszulauf (120) mit der Reinwasserableitung (118) der Umkehrosmosevorrichtung (110) verbunden ist, wobei die Geschirrspülmaschine (410) weiterhin mindestens eines der folgenden Elemente umfasst:
- eine Heizvorrichtung (416) zur Erwärmung der zugeführten Spülflüssigkeit, wobei die Heizvorrichtung (416) einen Boiler (416) umfasst, wobei der Boiler (416) einen Boilerwärmetauscher aufweist, welcher mit dem Warmwasserzulauf (128) der Umkehrosmosevorrichtung (114) verbunden ist, derart, dass der Boilerwärmetauscher dem Warmwasserzulauf (128) zugeführtes Wasser aufheizen kann;
- einen Tank (422), in welchem die Spülflüssigkeit zumindest teilweise gesammelt wird, wobei der Tank (422) einen Tankwärmetauscher (430) aufweist, welcher mit dem Warmwasserzulauf (128) der Umkehrosmosevorrichtung (114) verbunden ist, derart, dass der Tankwärmetauscher (430) dem Warmwasserzulauf (128) zugeführtes Wasser aufheizen kann.

2. Geschirrspülmaschine (410) nach dem vorhergehenden Anspruch, wobei die Mischvorrichtung (126) ein Mischventil (134) zur Mischung von Warmwasser und Kaltwasser aufweist.

3. Geschirrspülmaschine (410) nach einem der beiden vorhergehenden Ansprüche, wobei der Warmwasserzulauf (128) und der Kaltwasserzulauf (130) mindestens eines der folgenden Elemente aufweisen: ein Ventil (132), insbesondere ein Magnetventil; einen Temperaturfühler (138); einen Temperaturregler (140); eine Drossel, insbesondere eine Drossel mit fest eingestelltem oder einstellbarem Drosselquerschnitt.

4. Geschirrspülmaschine (410) nach einem der vorhergehenden Ansprüche, wobei die Mischvorrichtung (126) einen Mischbehälter aufweist, wobei der Mischbehälter mit der Umkehrosmosevorrichtung (114) verbunden ist.

5. Geschirrspülmaschine (410) nach dem vorhergehenden Anspruch, wobei der Mischbehälter mit der Umkehrosmosevorrichtung (114) über eine Drucksteigerungspumpe verbunden ist.

6. Geschirrspülmaschine (410) nach einem der vorhergehenden Ansprüche, wobei die Mischvorrichtung (126) zusätzlich eine Regelvorrichtung (140) zur Regelung der Mischungstemperatur aufweist.

7. Geschirrspülmaschine (410) nach einem der vorhergehenden Ansprüche, wobei der Konzentratablauf (122) derart über eine Konzentratrückführung (142) mit der Rohwasserzuleitung (116) verbunden ist, dass ein Teil des Konzentrats zurückgeführt wird.

8. Geschirrspülmaschine (410) nach dem vorhergehenden Anspruch, wobei das Rückführungsverhältnis über Blenden (144, 146) einstellbar ist.

9. Geschirrspülmaschine (410) nach einem der vorhergehenden Ansprüche, wobei der Boiler (416) mit dem Sprühsystem (414) über eine Drucksteigerungspumpe (418) verbunden ist.

10. Geschirrspülmaschine (410) nach einem der vorhergehenden Ansprüche, weiterhin aufweisend einen Wärmerückführungs-Wärmetauscher, welcher mit dem Warmwasserzulauf (128) der Umkehrosmosevorrichtung (114) verbunden ist, derart, dass der Wärmerückführungs-Wärmetauscher dem Warmwasserzulauf (128) zugeführtes Wasser aufheizen kann.

11. Geschirrspülmaschine (410) nach dem vorhergehenden Anspruch, wobei der Wärmerückführungs-Wärmetauscher eine Kondensatniederschlagseinrichtung zur Rückgewinnung von Wärme aus in der Spülkammer (412) enthaltener Luft oder aus in der Spülkammer (412) enthaltenem Dampf aufweist.

12. Geschirrspülmaschine (410) nach einem der vorhergehenden Ansprüche, weiterhin umfassend eine Maschinensteuerung (434), wobei die Maschinensteuerung (434) eingerichtet ist, um die Mischvorrichtung (126) der Wasseraufbereitungsvorrichtung (110) zu steuern.

## Claims

1. A dishwasher (410), comprising a washing chamber (412) with a spray system (414) for subjecting washing stock to washing liquid, the dishwasher (410) having a washing liquid inflow (120), the dishwasher (410) comprising, furthermore, a water treatment device (110), the water treatment device (110) comprising a reverse osmosis device (114) with a raw water supply line (116), with a pure water discharge line (118) and with a concentrate outflow (122), the raw water supply line (116) being connected to a mixing device (126), the mixing device (126) being designed to set a mixing temperature of the raw water delivered to the reverse osmosis device (114) and having a hot water inflow (128) and a cold water inflow (130), the washing liquid inflow (120) being connected to the pure water discharge line (118) of the reverse osmosis device (110), the dishwasher (410) comprising, furthermore, at least one of the following elements:
- a heating device (416) for heating the washing liquid supplied, the heating device (416) comprising a boiler (416), the boiler (416) having a boiler heat exchanger which is connected to the hot water inflow (128) of the reverse osmosis device (114) in such a way that the boiler heat exchanger can heat water supplied to the hot water inflow (128);
- a tank (422) in which the washing liquid is at least partially collected, the tank (422) having a tank heat exchanger (430) which is connected to the hot water inflow (128) of the reverse osmosis device (114) in such a way that the tank heat exchanger (430) can heat water supplied to the hot water inflow (128).

2. The dishwasher (410) as claimed in the preceding claim, the mixing device (126) having a mixing valve (134) for the mixing of hot water and cold water.

3. The dishwasher (410) as claimed in one of the two preceding claims, the hot water inflow (128) and the cold water inflow (130) having at least one of the following elements: a valve (132), in particular a solenoid valve; a temperature sensor (138); a temperature controller (140); a throttle, in particular a throttle with a permanently set or settable throttle cross section.

4. The dishwasher (410) as claimed in one of the preceding claims, the mixing device (126) having a mixing container, the mixing container being connected to the reverse osmosis device (114).

5. The dishwasher (410) as claimed in the preceding claim, the mixing container being connected to the reverse osmosis device (114) via a pressure increasing pump.

6. The dishwasher (410) as claimed in one of the preceding claims, the mixing device (126) additionally having a regulating device (140) for regulating the mixing temperature.

7. The dishwasher (410) as claimed in one of the preceding claims, the concentrate outflow (122) being connected to the raw water supply line (116) via a concentrate recirculation (142) such that part of the concentrate is recirculated.

8. The dishwasher (410) as claimed in the preceding claim, the recirculation ratio being settable via diaphragms (144, 146).

9. The dishwasher (410) as claimed in one of the preceding claims, the boiler (416) being connected to the spray system (414) via a pressure increasing pump (418).

10. The dishwasher (410) as claimed in one of the preceding claims, furthermore having a heat recirculation heat exchanger which is connected to the hot water inflow (128) of the reverse osmosis device (114) in such a way that the heat recirculation heat exchanger can heat water supplied to the hot water inflow (128).

11. The dishwasher (410) as claimed in the preceding claim, the heat recirculation heat exchanger having a condensate precipitation device for the recovery of heat from air contained in the washing chamber (412) or from steam contained in the washing chamber (412).

12. The dishwasher (410) as claimed in one of the preceding claims, furthermore comprising a machine control (434), the machine control (434) being set up in order to control the mixing device (126) of the water treatment device (110).

## Revendications

1. Lave-vaisselle (410) comprenant une chambre de lavage (412) munie d'un système d'arrosage (414) destiné à alimenter des produits à laver en liquide de lavage, le lave-vaisselle (410) présentant une arrivée de liquide de lavage (120), le lave-vaisselle (410) comprenant en outre un dispositif de traitement d'eau (110), le dispositif de traitement d'eau (110) comprenant un dispositif d'osmose inverse (114) doté d'une conduite d'arrivée d'eau brute (116), d'une conduite de sortie d'eau pure (118) et une sortie de concentré (122), la conduite d'arrivée d'eau brute (116) étant raccordée à un dispositif mélangeur (126), le dispositif mélangeur (126) étant agencé pour le réglage d'une température de mélange de l'eau brute amenée au dispositif d'osmose inverse (114) et présentant une arrivée d'eau chaude (128) et une arrivée d'eau froide (130), l'arrivée de liquide de lavage (120) étant raccordée à la conduite de sortie d'eau pure (118) du dispositif d'osmose inverse (110), le lave-vaisselle (410) comprenant en outre au moins l'un des éléments suivants :
- un dispositif de chauffage (416) destiné à échauffer le liquide de lavage amené, le dispositif de chauffage (416) comprenant un chauffe-eau (416), le chauffe-eau (416) présentant un échangeur de chaleur de chauffe-eau lequel est raccordé à l'arrivée d'eau chaude (128) du dispositif d'osmose inverse (114) de manière à ce que l'échangeur de chaleur du chauffe-eau puisse échauffer l'eau amenée à l'arrivé d'eau chaude (128) ;
- un réservoir (422) dans lequel le liquide de lavage est collecté au moins en partie, le réservoir (422) présentant un échangeur de chaleur de réservoir (430) lequel est raccordé à l'arrivée d'eau chaude (128) du dispositif d'osmose inverse (114) de manière à ce que l'échangeur de chaleur du réservoir (430) puisse échauffer l'eau amenée à l'arrivé d'eau chaude (128).

2. Lave-vaisselle (410) selon la revendication précédente, le dispositif mélangeur (126) présentant une soupape de mélange (134) pour le mélange d'eau chaude et d'eau froide.

3. Lave-vaisselle (410) selon l'une quelconque des deux revendications précédentes, l'arrivée d'eau chaude (128) et l'arrivée d'eau froide (130) présentant au moins l'un des éléments suivants: une vanne (132), notamment une vanne magnétique ; un capteur de température (138) ; un régulateur de température (140) ; un restricteur, notamment un restricteur à section de restriction réglée de manière fixe ou réglable.

4. Lave-vaisselle (410) selon l'une quelconque des revendications précédentes, le dispositif mélangeur (126) présentant un réservoir de mélange, le réservoir de mélange étant raccordé au dispositif d'osmose inverse (114).

5. Lave-vaisselle (410) selon la revendication précédente, le réservoir de mélange étant raccordé au dispositif d'osmose inverse (114) par l'intermédiaire d'une pompe d'augmentation de pression.

6. Lave-vaisselle (410) selon l'une quelconque des revendications précédentes, le dispositif mélangeur (126) présentant en plus un dispositif de réglage (140) pour régler la température de mélange.

7. Lave-vaisselle (410) selon l'une quelconque des revendications précédentes, la sortie de concentré (122) étant raccordée à la conduite d'arrivée d'eau brute (116) par l'intermédiaire d'un retour de concentré (142), de telle manière qu'une partie du concentré est remise en circulation.

8. Lave-vaisselle (410) selon la revendication précédente, le rapport de la remise en circulation étant réglable par l'intermédiaire d'obturateurs (144, 146).

9. Lave-vaisselle (410) selon l'une quelconque des revendications précédentes, le chauffe-eau (416) étant raccordé au système d'arrosage (414) par l'intermédiaire d'une pompe d'augmentation de pression (418).

10. Lave-vaisselle (410) selon l'une quelconque des revendications précédentes, présentant en outre un échangeur de chaleur pour retour de chaleur, lequel est raccordé à l'arrivée d'eau chaude (128) du dispositif d'osmose inverse (114), de telle manière que l'échangeur de chaleur pour retour de chaleur puisse échauffer l'eau à l'arrivée d'eau chaude (128).

11. Lave-vaisselle (410) selon la revendication précédente, l'échangeur de chaleur de retour de chaleur présentant un dispositif de précipitation de condensat destiné à récupérer la chaleur à partir de l'air contenu dans la chambre de lavage (412) ou de la vapeur contenue dans la chambre de lavage (412).

12. Lave-vaisselle (410) selon l'une quelconque des revendications précédentes, comprenant en outre une commande de machine (434), la commande de machine (434) étant configurée pour commander le dispositif mélangeur (126) du dispositif de traitement d'eau (110).
